# EUROPÄISCHE PATENTSCHRIFT

(11) **EP 1 967 657 B1**
(45) Veröffentlichungstag und Bekanntmachung des Hinweises auf die Patenterteilung: **04.11.2015**
(21) Anmeldenummer: 08004003.3
(22) Anmeldetag: 04.03.2008
(51) Int. Cl.: E03B 3/03, C02F 1/28

(54) **Filtervorrichtung für ein Reinigungssystem für mit Feststoffpartikeln und/oder gelösten Schadstoffen belastetes Wasser**
Filter device for a cleaning system for water containing solid particles and/or dissolved pollutants
Dispositif de filtre pour un système de nettoyage pour de l'eau chargé en particules de matière solide et/ou de substances toxiques dissoutes

(30) Priorität: 06.03.2007 DE 102007012266
(43) Veröffentlichungstag der Anmeldung: 10.09.2008
(73) Patentinhaber: 3P Technik Filtersysteme GmbH, 73072 Donzdorf (DE)
(72) Erfinder: Torras-Piqué, Jorge, 73337 Bad Überkingen (DE)
(74) Vertreter: Patentanwälte Magenbauer & Kollegen Partnerschaft mbB

(56) Entgegenhaltungen:
- EP-A2- 0 565 921
- WO-A1-2006/121268
- DE-A1- 10 231 241

## Beschreibung

Die Erfindung betrifft eine Filtervorrichtung für den Einsatz in einem Reinigungssystem zur Reinigung von mit Feststoffpartikeln und/oder gelösten Schadstoffen belastetes Wasser, insbesondere Oberflächenwasser. Dieses Oberflächenwasser ist in der Regel von versiegelten Bodenflächen abfließendes Regenwasser; insbesondere von durch Fahrzeuge stark frequentierten Flächen, wie Parkplätze, Parkdecks, Lande- und Rollbahnen von Flughäfen (Verkehrsflächen) oder Gewerbeflächen oder Regenwasser von Dachflächen, insbesondere von Metalldächern von Industriegebäuden.

Im Stand der Technik sind eine Reihe von Filtervorrichtungen zur Reinigung besagten Oberflächenwassers bekannt. Im Allgemeinen wird belastetes Wasser in eine erste Kammer eingelassen, durchfließt dann von dieser aus eine Filtereinheit und in einer zweiten Kammer wird das gereinigte Wasser gesammelt und von dort aus abgeleitet.

Dabei sind die Filter entweder so angeordnet, dass das Wasser zum Zwecke der Reinigung im so genannten Querstrom die Filter passiert oder derart, dass das Wasser im so genannten Aufstrom durch das oder die Filter-Elemente durchfließt.

So ist aus der DE 94 12 053 U1 ein Filterschacht bekannt, der einem Regenwasser-Speicher vorgeordnet ist. Das verunreinigte Wasser gelangt über einen Zulauf in eine Zulaufkammer. Von dieser aus durchfließt das Wasser im Querstrom einen vertikal angeordneten Grobfilter, so dass in der benachbarten Filterkammer gereinigtes Wasser vorliegt. Der Ablauf für das gereinigte Wasser ist im oberen Bereich dieser Kammer so angeordnet, dass der Ablauf höhenmäßig unter dem Zulauf liegt, so dass für den Wasserfluss kein Einsatz einer Pumpe oder dergleichen Fördermittel notwendig ist. Zur Erhöhung des Reinigungseffektes ist in der zweiten Kammer unterhalb des Ablaufes oder oberhalb der Oberkante der Grobfilter ein horizontal angeordneter Feinfilter vorgesehen. Das aus der zweiten Kammer dem Ablauf zuströmende Wasser durchfließt diesen Filter im so genannten Aufstrom. Die Zulaufkammer und die Auslaufkammer sind durch eine im Schachtkörper angeordnete, vertikal ausgerichtete Trennwand gebildet, wobei diese Trennwand in ihrem unteren Bereich auch die Grobfilter aufnimmt. Damit bei starkem Regenwasserzulauf, der stärker ist als der Ablauf, kein verschmutztes Wasser von der Zulaufkammer in die das gereinigte Wasser aufnehmende Auslaufkammer erfolgen kann, ist in der Zulaufkammer ein Überlauf in Form eines Abflussstandrohres vorgesehen, welches einenends aus dem Schachtkörper herausgehend geführt ist. Von Zeit zu Zeit sind die Filter dieses Filterschachtes zu reinigen, was mit erheblichem Aufwand verbunden ist.

Nach der DE 102 31 241 A1 ist ein weiteres Filterelement für mit Feststoffpartikeln und gelöstem Schadstoff belastetes Wasser sowie ein mit einem solchen Filterelement ausgerüstetes Reinigungssystem bekannt. Dieses Reinigungssystem und das darin verwendete Filterelement wird im Aufstrom-Prinzip betrieben. Hier liegen also die Kammern für das zulaufende, verschmutzte Wasser und das gereinigte Wasser nicht nebeneinander, sondern unter- und übereinander. Von einem Schmutzwassersammler aus erfolgt die Zuleitung des Schmutzwassers in die untere Kammer des Reinigungssystems. Der Ablauf an diesem Reinigungssystem ist so gewählt, dass er höhenmäßig unterhalb des Schmutzwassersammlers liegt, so dass auch hier ein Wasserstrom auf Grund des Gefälles, also ohne Einsatz von Fördermittel, erfolgt. Die untere Kammer ist von der oberen Kammer durch ein horizontal angeordnetes Filterelement getrennt. Das Filtermaterial dieses Filterelementes ist aus porösem Beton, wobei die Porengröße in Richtung der Schmutzwasserkammer größer ist.

Die sich im so genannten Schlammfang ansammelnden Feststoffpartikel können über eine separate Entsorgungsleitung abgesaugt werden. Bei dieser Lösung ist zur Erhöhung der Standzeit bzw. zur Wiederherstellung des projektierten Wirkungsgrades vorgesehen, das Filterelement von Zeit zu Zeit rückzuspülen. Die projektierte Größe des Filterelementes, das heißt, dass das Filterelement die gesamte Querschnittsfläche einnimmt, hat jedoch für den Austausch von Filterelementen einen hohen Arbeitszeitaufwand zur Folge. Da der das Filterelement aufnehmende Hauptschacht gemäß der Druckschrift im Endbereich angeordnet ist, ist für den Austausch der Filterelemente, das heißt für das Öffnen der oberen Abdeckung des Hauptschachtes auch die Bewegung von Erdreich notwendig.

Die WO 2006/121268 A1 offenbart eine Filtereinrichtung zur Reinigung von Oberflächenwasser. Das zu reinigende Wasser strömt dabei in eine untere Kammer ein, wobei hier ein Strömungswirbel erzeugt wird, so dass sich Sedimente in einem Sedimentsammler ablagern. Das Wasser steigt nun ein inneres Zylinderrohr hoch und fließt dort radial über eine Vielzahl von am Außenumfang des inneren Zylinderrohrs angeordnete Zufuhrrohre in zwei diametral mit Bezug zu dem inneren Zylinderrohr angeordnete Filtereinheiten. Über Ausströmöffnungen am Zufuhrrohr gelangt das Wasser also in diese Filtereinheiten, die wiederum mehrere zylindersektorartige Filterelemente in Form von mit Aktivkohle gefüllten Filtersäcken aufweisen. Die Filtersäcke sind aufeinandergestapelt. Die Filterung erfolgt in den Filtersäcken. Von dort strömt das Wasser über Siebe seitlich ab, durchströmt eine zwischen den beiden Filtereinheiten angeordnete Siebtrennwand und von dort in einen Sammler.

Die EP 0 565 921 A2 offenbart eine Anlage zur Aufbereitung und Förderung von Regenwasser zur Nutzung als Brauchwasser oder zur Regenwasserbehandlung zum Zwecke der Versickerung oder die Einleitung in ein Vorfluter. Es ist eine Filtervorrichtung vorgesehen, mit einem Filtergehäuse, in das Wasser im unteren Bereich über Einlaufmuffen einströmt. Das Wasser gelangt dann im Querstrom ins Innere einer Filterkerze, durchströmt diese radial und gelangt in ein inneres Rohr von wo dann gereinigtes Wasser abströmt.

Aufgabe der Erfindung ist es, eine Filtervorrichtung für ein Reinigungssystem für mit Feststoffpartikeln und/oder gelösten Schadstoffen belastetes Abwasser zu schaffen, die kostengünstig herstellbar ist und bei der der Aufwand für einen Wartungsvorgang gegenüber bekannten Vorrichtungen geringer ist.

Die Aufgabe der Erfindung wird durch eine Filtervorrichtung für ein Reinigungssystem für mit Feststoffpartikeln und/oder gelösten Schadstoffen belastetes Wasser mit den Merkmalen des Patentanspruches 1 gelöst. Die nachgeordneten Ansprüche 2 bis 13 offenbaren Weiterbildungen und Ausführungsvarianten der Erfindung.

Nach dem Grundgedanken der Erfindung besteht die neue Filtervorrichtung für ein Reinigungssystem zum Reinigen von Oberflächenwasser aus einem Gehäuse, dessen Innenraum in eine untere Kammer und eine obere Kammer unterteilt ist. In die untere Kammer mündet ein Zulauf für verunreinigtes Wasser ein. Das gereinigte Wasser wird von der oberen Kammer über einen Ablauf, zum Beispiel zu einer Zisterne, abgeleitet. Im Innenraum des Gehäuses ist im Grenzbereich zwischen der unteren und der oberen Kammer eine Filtereinheit angeordnet, die zugleich eine Trennwand zwischen diesen beiden Kammern ist. Diese Filtereinheit liegt im Aufstrom des Wasserflusses und ist definiert wasserdurchlässig. Die Filtereinheit besteht aus mehreren Filterelementen. Die Filterelemente bestehen jeweils aus einem oben offenen, mit Filtermaterial gefüllten Hohlkörper, wobei im Boden der Hohlkörper wenigstens eine Eintrittsöffnung vorgesehen ist, wobei die Filtereinheit mehrteilig aus mehreren nebeneinander um einen Mittelpunkt herum angeordneten und einzeln auswechselbaren Filterelementen aufgebaut ist.

Hierdurch wird erreicht, dass die Filtereinheit modular gestaltet werden kann. Gegenüber bekannten modularen Filtereinheiten ist hier jedoch von Vorteil, dass die Filtereinheiten bezogen auf den Querschnitt des Gehäuses und seiner oberen Öffnung relativ klein gehalten sind, so dass die Wartung der Filtereinheit oder einzelner Teile selbiger bzw. deren Austausch leichter und kostengünstiger erfolgen kann.

Damit ist die neue Filtervorrichtung auch für ein dezentrales Regenwassermanagement einsetzbar, so dass auch Wasser von zwar kleineren Flächen, die aber durchaus erhebliche Konzentrationen an Wasser gefährdenden Inhaltsstoffe aufweisen, kostengünstig gereinigt werden kann.

Zudem kann die neue Filtervorrichtung in ihrer Gesamtkonzeption, insbesondere ihren äußeren Maße so gehalten werden, dass sie in die Hauptschächte bestehender Regenwasserreinigungssysteme nachträglich einbaubar ist, so dass zumindest die fortan anfallenden Wartungs- und Reinigungsarbeiten gegenüber dem Zustand zuvor geringer gehalten werden können. Nach einer Ausführung ist so zum Beispiel vorgesehen, dass die Filterelemente der Filtereinheit Zylinder-Sektoren sind.

Zudem ist es vorteilhaft, wenn die Filtereinheit von einer Hohlsäule zentrisch durchsetzt ist, wobei das untere Ende der Hohlsäule einen Zugang zur unteren Kammer hat und das obere Ende der Hohlsäule in der oberen Kammer der Filtervorrichtung endet, bevorzugt außerhalb des Gehäuses der Filtervorrichtung.

Die Filterelemente bestehen jeweils aus einem oben offenen, mit Filtermaterial gefüllten Hohlkörper, wobei im Boden der Hohlkörper wenigstens eine Eintrittsöffnung vorgesehen ist. Bevorzugt ist / sind die Eintrittsöffnung / -en der Hohlkörper Eintrittsstutzen.

Weiterhin ist bevorzugt vorgesehen, dass der aus mehreren Filterelementen bestehenden Filtereinheit ein Sperrelement beigeordnet ist, wobei das Sperrelement die Trennwand zwischen der unteren Kammer und der oberen Kammer bildet. Die Filterelemente sind hier auf dem Sperrelement aufgesetzt, wobei das Sperrelement, in Einbaulage, vertikal gerichtete Durchbrüche aufweist, die jeweils mit einer Eintrittsöffnung des betreffenden, darüber angeordneten Filterelemente deckungsgleich sind. Es ist selbstredend, dass jede Eintrittsöffnung auf dem betreffenden Durchbruch wasserdicht anliegt. In spezieller Ausführung ist zudem vorgesehen, dass in jedem Durchbruch des Sperrelementes ein Dichtring angeordnet ist, in welchem jeweils der Eintrittsstutzen des darüber liegenden betreffenden Filterelementes positioniert, also eingesteckt ist.

Die untere Kammer der Filtervorrichtung wird nach unten durch einen Boden des Gehäuses begrenzet, Dieser Boden ist zugleich Sedimentsammler für die im zugeführten verunreinigten Wasser enthaltenen gröberen Feststoffe. Das verunreinigte Wasser wird tangential im oberen Abschnitt der unteren Kammer eingeführt, sodass neben einer vertikalen Strömung des Wassers auch eine kreisende Strömung erzeugt ist.

Bevorzugt ist zudem vorgesehen, dass in der unteren Kammer ein Sedimentsammler, bevorzugt in Form eines herausnehmbaren Gefäßes, aufgestellt ist. Weiterhin ist vorgesehen, dass auf dem oberen Rand dieses Sedimentsammlers ein, eine zentrische Öffnung aufweisender, Trichter aufgesetzt ist. In Verbindung mit dem tangential eintretenden Wasserzulauf ist somit ein Hydrozyklon mit Sedimentsammler gebildet.

Das Entleeren des Sedimentsammlers kann mittels einer Absaugung erfolgen. Dabei wird ein entsprechender Absaugschlauch durch die Hohlsäule, die die Filtereinheit zentrisch durchsetzt, in die untere Kammer der Filtervorrichtung entsprechend tief eingeführt. Die Hohlsäule ist also einerseits Überlauf, falls ein extrem starker Zulauf von verunreinigtem Wasser erfolgt, und andererseits zugleich Bauteil bezüglich der Sediment- / Schlamm-Entsorgung. Gegenüber Lösungen nach dem Stand der Technik ist also bei der neuen Filtervorrichtung kein separater Bypass am Gehäuse für die Entschlammung vorzusehen. Auch hierdurch verringern sich bei der neuen Filtervorrichtung die Herstellungs- als auch die Wartungskosten.

Sofern die Entleerung des Sedimentsammlers nicht in ausreichendem Umfang durch Absaugung erfolgen kann, wird der Sedimentsammler aus dem Gehäuse zum Entleeren entnommen. Hierbei ist zunächst der das Gehäuse oben abschließende Deckel zu entnehmen, sodann werden die relativ kleinen Filterelemente der mehrteiligen Filtereinheit nach und nach entnommen und je nach Ausführung auch das besagte Sperrelement. Danach ist der Sedimentsammler zugänglich und kann entnommen und geleert werden.

Das Filtermaterial der Filterelemente ist in bevorzugter Ausführung ein poröser Beton. Die Porengröße im Filtermaterial nimmt, in Strömungsrichtung des Wassers gesehen, von unten nach oben ab.

Alternativ ist, je nach vorgesehenem Einsatzfall, das Filtermaterial auch körniges Material verschiedener Substanzen, wobei im Hohlkörper des Filterelementes oberhalb des Filtermaterials ein Gitter zur Verhinderung des Abfließens von Filtermaterial vorgesehen ist. Je nach verwendeter Substanz, insbesondere bei körnigen Kunststoffen, kann der Halt zwischen den einzelnen Körnern des körnigen Materials auch durch so genanntes Verbacken (Erhitzen) oder durch Verkleben hergestellt sein.

Nach einer anderen Alternative kann dem Beton auch körniger Kunststoff, Glas oder dergleichen Substrat beigemischt werden. In der Riegelausführung ist vorgesehen, dass das verwendete Filtermaterial Schwermetalls, wie Blei, Kupfer, Zink und Cadmium, Kohlenwasserstoffe wie Mineralöle und PAK (polycyclische, aromatische Kohlenwasserstoffe) sowie Nährstoffe wie Phosphate und dergleichen adsorbieren kann.

Die Erfindung wird nachstehend anhand von in Zeichnungen gezeigten schematischen Darstellungen und anhand eines Ausführungsbeispieles näher erläutert. Es zeigen:
- Fig. 1: schematisch den Aufbau der neuen Filtervorrichtung;
- Fig. 1a: eine Sicht in das Filtergehäuse der Filtervorrichtung nach Figur 1 mit Blick auf die Filtereinheit;
- Fig. 1b: eine Ausführungsvariante zu der Filtervorrichtung nach Figur 1;
- Fig. 1c: in Seitenansicht und teilweisem Schnitt (Schnitt AA aus Figur 1b) eine bevorzugte Ausführung der neuen Filtervorrichtung;
- Fig. 2: in perspektivischer Sicht von oben einen Blick auf Filterelemente der Filtereinheit der neuen Filtervorrichtung;
- Fig. 3: ein Bauteil der neuen Filterfeinheit und
- Fig. 4: die Einzelheit "E" aus der Figur 1c.

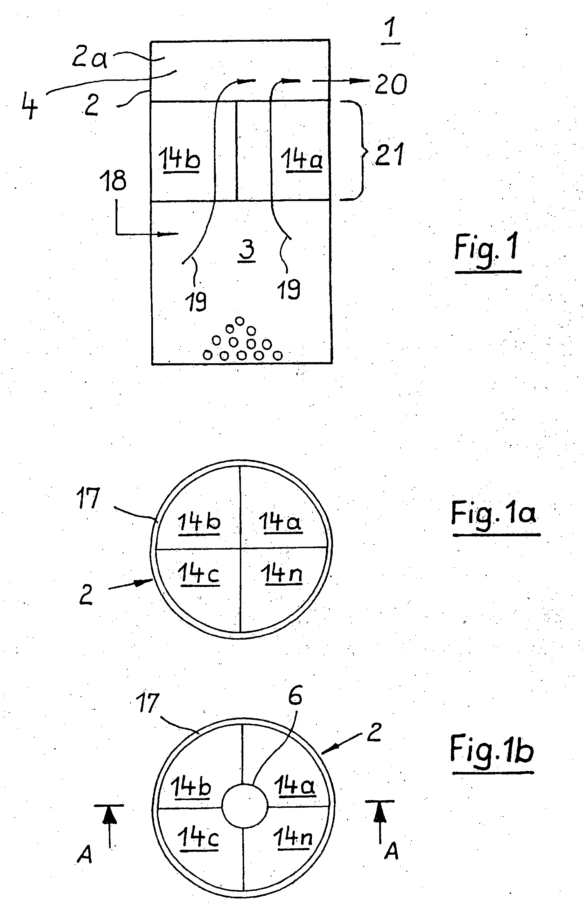

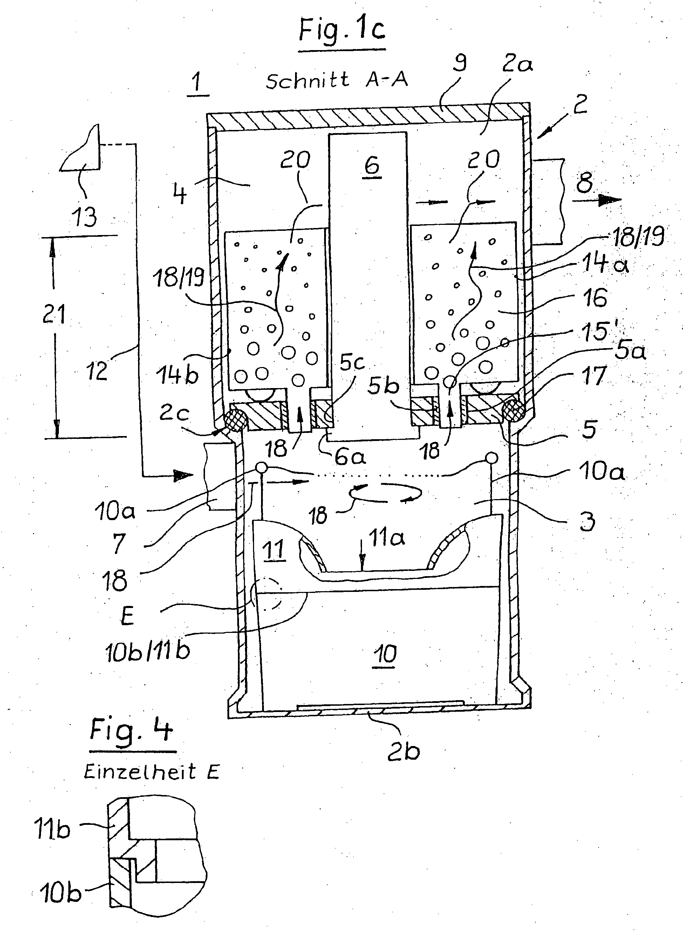

In den Figuren 1 und 1a ist die neue Filtervorrichtung 1 für ein Reinigungssystem für mit Feststoffpartikeln und / oder gelösten Schadstoffen belastetes Wasser in schematischer Darstellung gezeigt. Der Innenraum 2a eines Gehäuses 2 der Filtervorrichtung 1 ist in eine untere Kammer 3 und eine obere Kammer 4 unterteilt. In die untere Kammer 3 wird das verunreinigte Wasser 18 eingeleitet. Im Grenzbereich zwischen der unteren Kammer 3 und der oberen Kammer 4 ist eine Filtereinheit 21 vorgesehen, die mehrteilig ausgeführt und modular aufgebaut ist. Die Filtereinheit 21 besteht aus mehreren, nebeneinander angeordneten Filterelementen 14a, ... 14n, bevorzugt aus Zylinder-Sektoren, die konzentrisch um einen Mittelpunkt angeordnet sind, sodass sie dort die gesamte horizontale Querschnittsfläche des Innenraumes 2a ausfüllen.

Damit jedoch die untere Kammer 3 von der oberen Kammer 4 derart abgedichtet ist, dass Wasser nur durch die Filterelemente hindurch von der einen Kammer 3 in die andere Kammer 4 - im Aufstrom 19 - strömen kann, ist zwischen der Wand des Innenraumes 2a und der Außenfläche der Filtereinheit eine Dichtung 17 angeordnet. Die Verwendung einer Dichtung 17 hat zudem den Vorteil, dass bei der Fertigung der Filterelemente 14a, ...14n und der Herstellung der Benutzungsfähigkeit der Filtervorrichtung eine grobe Maßtoleranz gewählt werden kann, sodass auch der Zeitaufwand für die Herrichtung der Filtervorrichtung als auch der Zeitaufwand für Wartungsarbeiten minimierbar ist.

Die einander zugewandten Senkrecht-Flächen benachbarter Filterelemente liegen wasserdicht aneinander an.

In einer speziellen Ausgestaltung weisen diese Seitenwände eine Vielzahl von labyrinth-artig angeordneten, vorzugsweise seitwärts gerichteten Lamellen auf, die im zusammengebauten Zustand ineinander greifen und somit die entsprechende Dichtung herstellen.

Das gereinigte Wasser 20 wird aus der oberen Kammer 4 abgeführt und nachfolgenden Baueinheiten, zum Beispiel einer Zisterne, zugeführt.

In der Figur 1b ist eine Variante der neuen Filtervorrichtung gezeigt, bei dem die Filtereinheit 21 zentrisch von einer Hohlsäule 6, bevorzugt ein Rohr, durchsetzt ist. Dieses Rohr 6 reicht von der oberen Kammer 4 bis hinunter in die untere Kammer 3 und endet bevorzugt im oberen Abschnitt der unteren Kammer 3, vorzugsweise oberhalb der Oberkante des Zulaufes. Ersichtlich ist in Figur 1b, dass die Filterelementen 14a, 14b, 14c und 14n nunmehr Zylinder-RingSektoren sind.

Eine spezielle, bevorzugte Ausführungsvariante der neuen Filtervorrichtung zeigt die Figur 1c. Auch hier ist der innere Raum 2a des Gehäuses 2 der neuen Filtervorrichtung 1 in eine untere Kammer 3 und eine obere Kammer 4 unterteilt. Die Trennung der übereinander angeordneten Kammern 3 und 4 erfolgt auch hier durch die Filtereinheit 21, die hier eine spezielle Ausgestaltung aufweist.

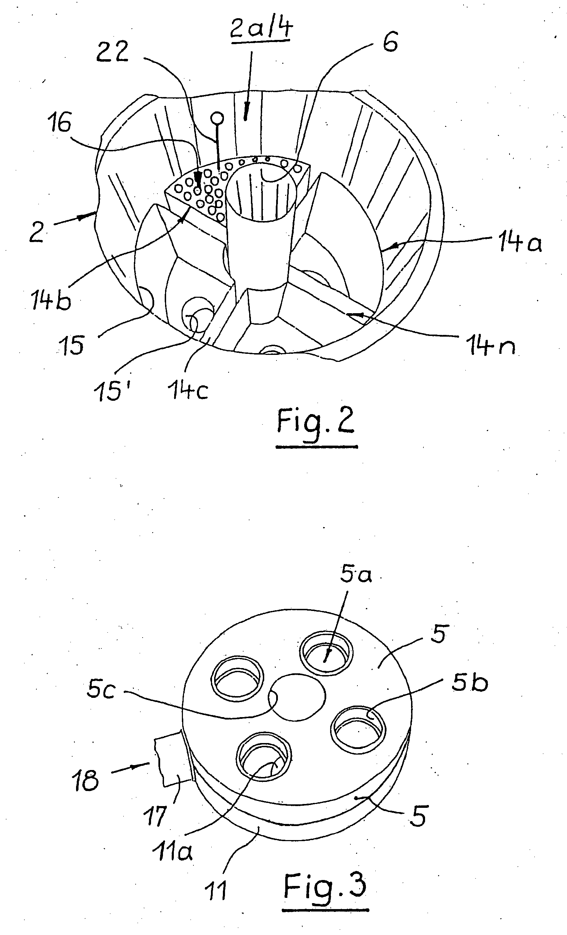

Im Grenzbereich der unteren Kammer 3 und der oberen Kammer 4 ist in der Wandung des Innenraumes 2a ein Absatz 2c ausgeformt, auf den 2c die Dichtung 17 aufliegt. Die Filtereinheit 21 besteht hier aus den in Figur 2 gezeigten speziellen Filterelementen 14a, ...14n und einem unterhalb der Filterelemente 14a, ...14n angeordneten Sperrelement 5, welches randseitig an der Dichtung 17 anliegt.

Das Sperrelement 5, siehe auch Figur 3, besitzt entsprechend der vorgesehenen Anzahl von Filterelementen 14a, ... 14n mehrere vertikale Durchbrüche 5a. In diesen Durchbrüchen 5a ist je ein Dichtring 5b angeordnet. Diese Dichtringe 5b umschließen jeweils einen Eintrittsstutzen 15' des betreffenden Filterelementes 14, ...14n.

Zentrisch ist ein Durchbruch 5c vorgesehen, durch den hindurch die Hohlsäule 6 geführt wird, vor der Platzierung des Sperrelementes 5 in dem Innenraum 2a des Gehäuses 2. Die Hohlsäule 6 besitzt an ihrem in der Darstellung unteren Ende einen Flansch 6a, der von unten an dem Sperrelement 5 anliegt und dort wasserdicht mit dem Sperrelement verklebt oder verschweißt ist.

Jedes Filterelement 14a, ...14n wird hier von einem obenseitig offenen Hohlkörper 15 gebildet, der mit einem Filtermaterial 16 gefüllt ist.

In der Figur 2 geht der Blick in perspektivischer Sicht von oben auf die Filterelemente 14a, ...14n der Filtereinheit 21. Zwecks besserer Anschaulichkeit ist nur ein Filterelement, das Filterelement 14b, mit einem Filtermaterial 16, einem porösen Beton, gefüllt. Bei der Herstellung dieses Filterelementes 14b ist zugleich eine Stange 22 mit eingegossen worden, die nach oben aus dem Filterelement 14b herausragt. Diese Stange 22 ist ein Hilfsmittel für die Entnahme des Filterelementes. Die Filterelemente 14a, 14b, 14c und 14n sind hier noch nicht mit Filtermaterial 16 ausgefüllt. In der Regel erfolgt die Einfüllung des Filtermaterials außerhalb des Gehäuses 2 der Filtervorrichtung 1. Deutlich erkennbar ist hier die "äußere Haut" eines jeden Filterelementes, der Hohlkörper 15. In dessen Boden ist eine Eintrittsöffnung vorgesehen, die hier als Eintrittsstutzen 15' geformt ist. Da die untere Kammer 3 von der oberen Kammer 4 durch das schon erwähnte Sperrelement 5 wassertechnisch getrennt ist, kann nach dieser Ausführungsvariante bei der Herstellung der Filterelemente eine sehr grobe Fertigungstoleranz gewählt werden. Hier ist es nicht notwendig, dass die Seitenflächen der Filterelemente 14a, 14b, 14c und 14n wasserdicht aneinander anliegen.

Die Porengröße des Filtermaterials, hier ein poröser Beton, wird in Richtung von unten nach oben, kleiner. Mit diesem Filtermaterial werden einerseits die dem im Aufstrom 19 durch die Filterelemente geführten Wasser 18 noch anhaftenden Feststoffe zurückgehalten, andererseits erfolgt eine Adsorption von im Wasser 18 gelösten chemischen Elementen. Dabei bestimmt die gewählte Zusammensetzung des Betons, welche chemischen Elemente adsorbiert werden können.

Das oberhalb der Filterelemente 14a, ...14n austretende gereinigte Wasser 20 fließt durch einen Ablauf 8 zur weiteren Verwendung ab. Das heißt, es kann einer nachgeordneten Zisterne zugeführt werden oder das gereinigte Wasser wird zum Beispiel einem Oberflächengewässer zugeführt; das gereinigte Wasser kann aber auch im Boden versickern.

Aus Sicherheitsgründen als auch damit keine Verunreinigungen in das gereinigte Wasser 20 gelangen, ist das an sich nach oben offene Gehäuse 2 mit einem Deckel 9 abgedeckt.

Die Zuleitung von verunreinigtem Wasser zu der Filtervorrichtung 1 hin erfolgt aus einer

Rinne / Wassersammler 13, dessen Höhenniveau oberhalb des Ablaufes 8 liegt. Über eine Rohrleitung 12 wird das verunreinigte Wasser 18 zum Zulauf 7 hin geführt.

Dieser Zulauf 7 ist im oberen Abschnitt der unteren Kammer 3 angeordnet und so ausgerichtet, dass eine tangentiale Wassereinleitung in die untere Kammer 3 erfolgt. In dieser unteren Kammer 3 ist zudem ein Trichter 11 mit einer zentrischen Öffnung 11a angeordnet. In Verbindung mit der tangentialen Wassereinleitung wird somit bei Zuströmung von Wasser 18 ein Hydrozyklon erzeugt, wodurch hier zumindest die Abscheidung von groben Feststoffpartikeln erzwungen wird. Bevorzugt ist zudem vorgesehen, dass unterhalb des Trichters 11 ein Sedimentsammler 10, vorzugsweise auf den Boden 2b gestellt, angeordnet ist.
Bevorzugt ist der obere Rand 10b dieses Sedimentsammlers 10 so gestaltet, dass der Trichter 11 mit seinem unteren Rand 1 1 b auf selbigem 10 aufsetzbar - gezeigt als Einzelheit "E" in Figur 4 - ist. Hierdurch sind weitere Haltevorrichtung für den Trichter 11 nicht notwendig. Am Sedimentsammler 10 sind zudem Streben 10a vorgesehen. Zwischen diesen ist ein Seil (ohne Bezugszeichen) angeordnet. Die Streben 10a und das Seil erleichtern ein Herausnehmen des Trichters 11 als auch des Sedimentsammlers 10 bei Intervallmäßigen Wartungsarbeiten oder in einem Havarie-Fall. Es versteht sich von selbst, dass bei Ableitung des verunreinigten Wassers 18 aus der Rinne / Wassersammler 13 dort ein Vorfilter vorgesehen ist, der Laub und sonstige grobe Verunreinigungen, wie Äste und dergleichen, schon von vornherein von der Filtervorrichtung fern hält.

Bei dem in Figur 3 gezeigten Ausführungsbeispiel ist der Trichter 11 von unten her direkt an dem Sperrelement 5 angeordnet. Bevorzugt sind beide Bauteile 5 und 11 zusammen einstückig ausgebildet, zumindest zur Vereinfachung und Senkung des Montage-Aufwandes miteinander verklebt oder verschweißt.

Die Erfindung ist nicht auf das gezeigte Ausführungsbeispiel beschränkt und im Rahmen der Offenbarung wie durch die Ansprüche definiert vielfach variabel. So kann bei Änderung der Zusammensetzung des Oberflächenwassers durch die neue Gestaltung der Filtervorrichtung relativ einfach und kostengünstig die aus mehreren Filterelementen bestehende Filtereinheit gewechselt werden.
Die Form der Filterelemente ist nicht auf die genannte Ausführung als Zylinder-Sektor oder Zylinder-Kreis-Sektor beschränkt. Es sind Ausführungen möglich nach der die einzelnen Filterelemente einen prismatischen, pyramidenförmigen, kegel- oder kegelstumpfförmigen Körper besitzen.

### Bezugszeichenliste

- 1: Filtervorrichtung
- 2: Gehäuse
- 2a: Innenraum
- 2b: Boden
- 2c: Absatz
- 3: untere Kammer (verunreinigtes Wasser)
- 4: obere Kammer (gereinigtes Wasser)
- 5: Sperrelement
- 5a: Durchbrüche
- 5b: Dichtringe
- 5c: zentrischer Durchbruch
- 6: Hohlsäule (Rohr)
- 6a: Flansch
- 7: Zulauf (tangentiale Wassereinleitung)
- 8: Ablauf
- 9: Deckel
- 10: Sedimentsammler
- 10a: Streben
- 10b: oberer Rand (von Pos. 10)
- 11: Trichter
- 11a: Öffnung
- 11 b: unterer Rand (von Pos. 11)
- 12: Rohrleitung
- 13: Rinne / Wassersammler
- 14a,...14n: Filterelemente
- 15: Hohlkörper
- 15': Eintrittsstutzen
- 16: Filtermaterial
- 17: Dichtung
- 18: verunreinigtes Wasser
- 19: Aufstrom
- 20: gereinigtes Wasser
- 21: Filtereinheit
- 22: Stange
- E: Einzelheit aus Figur 1c

## Patentansprüche

1. Filtervorrichtung für ein Reinigungssystem zum Reinigen von Oberflächenwasser, bestehend aus einem Gehäuse (2), dessen Innenraum (2a) eine untere Kammer (3) und eine obere Kammer (4) aufweist, einem Zulauf (7) für verunreinigtes Wasser (18) in der unteren Kammer (3), einem Ablauf (8) für gereinigtes Wasser (20) in der oberen Kammer (4) und wenigstens einer, im Aufstrom (19) des Wassers zwischen der unteren Kammer (3) und der oberen Kammer (4) angeordneten Filtereinheit (21), wobei die wenigstens eine Filtereinheit (21) zugleich eine definiert Wasser durchlässige Trennwand zwischen den beiden Kammern (3 und 4) ist, wobei die Filtereinheit (21) aus mehreren Filterelementen (14a, ... 14n) besteht, **dadurch gekennzeichnet, dass** die Filterelemente (14a, ... 14n) jeweils aus einem oben offenen, mit Filtermaterial (16) gefüllten Hohlkörper (15) bestehen, wobei im Boden der Hohlkörper (15) wenigstens eine Eintrittsöffnung vorgesehen ist, wobei die Filtereinheit (21) mehrteilig aus mehreren nebeneinander um einen Mittelpunkt herum angeordneten und einzeln auswechselbaren Filterelementen (14a, ... 14n) aufgebaut ist.

2. Filtervorrichtung nach Anspruch 1, **dadurch gekennzeichnet, dass** die Filterelemente (14a, ... 14n) Zylindersektoren sind.

3. Filtervorrichtung nach Anspruch 1 oder 2, **dadurch gekennzeichnet, dass** die Filtereinheit (21) von einer Hohlsäule (6) zentrisch durchsetzt ist.

4. Filtervorrichtung nach einem der vorhergehenden Ansprüche, **dadurch gekennzeichnet, dass** die Eintrittsöffnung/-en der Hohlkörper (15) Eintrittsstutzen (15') ist/sind.

5. Filtervorrichtung nach einem der vorhergehenden Ansprüche, **dadurch gekennzeichnet, dass** die Filtereinheit (21) aus mehreren Filterelementen (14a, ... 14n) und einem Sperrelement (5) besteht, wobei das Sperrelement die Trennwand zwischen der unteren Kammer (3) und der oberen Kammer (4) bildet, und die Filterelemente (14a, ... 14n) auf dem Sperrelement (5) aufgesetzt sind, wobei das Sperrelement (5) Durchbrüche (5a) aufweist, die jeweils mit einer Eintrittsöffnung der Filterelemente (14a, ... 14n) deckungsgleich sind.

6. Filtervorrichtung nach Anspruch 5, **dadurch gekennzeichnet, dass** in jedem Durchbruch (5a) des Sperrelementes (5) ein Dichtring (5b) angeordnet ist, in welchem jeweils der Eintrittsstutzen (15') des betreffenden Filterelementes (14a, ... 14n) positioniert ist.

7. Filtervorrichtung nach einem der vorhergehenden Ansprüche, **dadurch gekennzeichnet, dass** in der unteren Kammer (3) ein Sedimentsammler (10) vorgesehen ist.

8. Filtervorrichtung nach einem der vorhergehenden Ansprüche, **dadurch gekennzeichnet, dass** in der unteren Kammer (3) ein Trichter (11) vorgesehen ist, mit einer unteren Öffnung (11a)

9. Filtervorrichtung nach Anspruch 7, **dadurch gekennzeichnet, dass** in der unteren Kammer (3) oberhalb des Sedimentsammlers (10) ein Trichter (11), mit einer unteren Öffnung (11a) vorgesehen ist, vorzugsweise auf den Sedimentsammler (10) aufgesetzt.

10. Filtervorrichtung nach einem der Ansprüche 5, 6 und 8, **dadurch gekennzeichnet, dass** der Trichter (11) unmittelbar unter dem Sperrelement (5) angeordnet ist, vorzugsweise sind beide Bauteil (5 und 11) einstückig.

11. Filtervorrichtung nach einem der vorhergehenden Ansprüche, **dadurch gekennzeichnet, dass** das Filtermaterial (16) ein poröser Beton ist.

12. Filtervorrichtung nach Anspruch 11, **dadurch gekennzeichnet, dass** die Porengröße im Filtermaterial (16), in Strömungsrichtung des Wassers gesehen, von unten nach oben abnimmt.

13. Filtervorrichtung nach einem der vorhergehenden Ansprüche, **dadurch gekennzeichnet, dass** das Filtermaterial (16) körniges Material verschiedener Substanzen ist, wobei im Hohlkörper (15) oberhalb des Filtermaterials (16) ein Gitter vorgesehen ist.

## Claims

1. Filter device for a purifying system for purifying surface water, the device comprising a housing (2), the interior (2a) of which has a lower chamber (3) and an upper chamber (4), and further comprising an inlet (7) for contaminated water (18) in the lower chamber (3), an outlet (8) for purified water (20) in the upper chamber (4) and at least one filter unit (21) placed in the ascending flow (19) of the water between the lower chamber (3) and the upper chamber (4), wherein the at least one filter unit (21) simultaneously forms a partition for the passage of a defined water quantity between the two chambers (3 and 4), the filter unit (21) comprising a plurality of filter elements (14a, .... 14n), **characterised in that** each of the filter elements (14a, .... 14n) consists of a hollow body (15) open at the top and filled with filter material (16), wherein at least one inlet opening is provided in the base of the hollow bodies (15), the filter unit (21) being constructed in several parts from a plurality of filter elements (14a, .... 14n), which are placed side by side around a centre and individually replaceable.

2. Filter device according to claim 1, **characterised in that** the filter elements (14a, .... 14n) are sectors of a cylinder.

3. Filter device according to claim 1 or 2, **characterised in that** a hollow column (6) centrally passes through the filter unit (21).

4. Filter device according to any of the preceding claims, **characterised in that** the inlet opening(s) of the hollow bodies (15) is (are) inlet connections (15').

5. Filter device according to any of the preceding claims, **characterised in that** the filter unit (21) consists of a plurality of filter elements (14a, .... 14n) and a blocking element (5), wherein the blocking element (5) forms the partition between the lower chamber (3) and the upper chamber (4) and the filter elements (14a, .... 14n) are mounted on the blocking element (5), the blocking element (5) having through-openings (5a), each of which is congruent with an inlet opening of the filter elements (14a, .... 14n).

6. Filter device according to claim 5, **characterised in that** a sealing ring (5b), in which the inlet connection (15') of the respective filter element (14a, .... 14n) is located, is provided in each through-opening (15') of the blocking element (5).

7. Filter device according to any of the preceding claims, **characterised in that** a sediment collector (10) is provided in the lower chamber (3).

8. Filter device according to any of the preceding claims, **characterised in that** a funnel (11) with a bottom opening (11a) is provided in the lower chamber (3).

9. Filter device according to claim 7, **characterised in that** a funnel (11) with a bottom opening (11 a) is provided in the lower chamber (3) above the sediment collector (10) and preferably mounted on the sediment collector (10).

10. Filter device according to claim 5, 6 or 8, **characterised in that** the funnel (11) is located directly below the blocking element (5), both components (5 and 11) preferably forming a single piece.

11. Filter device according to any of the preceding claims, **characterised in that** the filter material (16) is a porous concrete.

12. Filter device according to claim 11, **characterised in that** the pore size in the filter material (16) is reduced from the bottom towards the top in the direction of water flow.

13. Filter device according to any of the preceding claims, **characterised in that** the filter material (16) is a granular material of various substances, a grid being provided in the hollow body (15) above the filter material (16).

## Revendications

1. Dispositif de filtre pour un système de nettoyage servant à nettoyer une eau de surface, constitué d'un boîtier (2), dont l'espace intérieur (2a) présente une chambre inférieure (3) et une chambre supérieure (4), d'une arrivée (7) pour l'eau non purifiée (18) dans la chambre inférieure (3), d'une évacuation (8) pour l'eau purifiée (20) dans la chambre supérieure (4) et d'au moins une unité filtrante (21) disposée dans le flux ascendant (19) de l'eau entre la chambre inférieure (3) et la chambre supérieure (4), sachant que au moins une unité filtrante (21) est dans le même temps une cloison de séparation laissant passer de manière définie l'eau entre les deux chambres (3 et 4), sachant que l'unité filtrante (21) est constituée de plusieurs éléments filtrants (14a, ..., 14n), **caractérisé en ce que** les éléments filtrants (14a, ..., 14n) sont constitués respectivement d'un corps creux (15) ouvert en haut, rempli d'un matériau filtrant (16), sachant qu'au moins une ouverture d'entrée est prévue dans le fond des corps creux (15), sachant que l'unité filtrante (21) présente une structure en plusieurs parties composée de plusieurs éléments filtrants (14a, ..., 14n) disposés de manière juxtaposée autour d'un point central et pouvant être remplacés individuellement.

2. Dispositif de filtre selon la revendication 1, **caractérisé en ce que** les éléments filtrants (14a, ..., 14n) sont des secteurs cylindriques.

3. Dispositif filtrant selon la revendication 1 ou 2, **caractérisé en ce que** l'unité filtrante (21) est traversée de manière centrée par une colonne creuse (6).

4. Dispositif de filtre selon l'une quelconque des revendications précédentes, **caractérisé en ce que** l'ouverture d'entrée ou les ouvertures d'entrée des corps creux (15) sont des tubulures d'entrée (15').

5. Dispositif de filtre selon l'une quelconque des revendications précédentes, **caractérisé en ce que** l'unité filtrante (21) est constituée de plusieurs éléments filtrants (14a, ..., 14n) et d'un élément de blocage (5), sachant que l'élément de blocage forme la cloison de séparation entre la chambre inférieure (3) et la chambre supérieure (4), et les éléments filtrants (14a, ..., 14n) sont posés sur l'élément de blocage (5), sachant que l'élément de blocage (5) présente des perforations (5a), qui coïncident respectivement avec une ouverture d'entrée des éléments filtrants (14a, ..., 14n).

6. Dispositif de filtre selon la revendication 5, **caractérisé en ce que**, dans chaque perforation (5a) de l'élément de blocage (5), une bague d'étanchéité (5b) est disposée, dans laquelle respectivement la tubulure d'entrée (15') de l'élément filtrant (14a, ..., 14n) concerné est positionnée.

7. Dispositif de filtre selon l'une quelconque des revendications précédentes, **caractérisé en ce qu'**un collecteur de sédiments (10) est prévu dans la chambre inférieure (3).

8. Dispositif de filtre selon l'une quelconque des revendications précédentes, **caractérisé en ce qu'**un entonnoir (11) est prévu dans la chambre inférieure (3), avec une ouverture inférieure (11a).

9. Dispositif de filtre selon la revendication 7, **caractérisé en ce qu'**un entonnoir (11) avec une ouverture inférieure (11a) est prévu dans la chambre inférieure (3) au-dessus du collecteur de sédiments (10), l'entonnoir étant de préférence posé sur le collecteur de sédiments (10).

10. Dispositif de filtre selon l'une quelconque des revendications 5, 6 et 8, **caractérisé en ce que** l'entonnoir (11) est disposé directement sous l'élément de blocage (5), de préférence les deux composants (5 et 11) sont d'un seul tenant.

11. Dispositif de filtre selon l'une quelconque des revendications précédentes, **caractérisé en ce que** le matériau filtrant (16) est un béton poreux.

12. Dispositif de filtre selon la revendication 11, **caractérisé en ce que** la taille des pores dans le matériau filtrant (16), vue dans le sens d'écoulement de l'eau, diminue du bas vers le haut.

13. Dispositif de filtre selon l'une quelconque des revendications précédentes, **caractérisé en ce que** le matériau filtrant (16) est un matériau granulaire de différentes substances, sachant qu'une grille est prévue dans le corps creux (15) au-dessus du matériau filtrant (16).
